# FASCICULE DE BREVET EUROPEEN

(11) **EP 3 090 910 B1**
(45) Date de publication et mention de la délivrance du brevet: **04.11.2020**
(21) Numéro de dépôt: 16165205.2
(22) Date de dépôt: 14.04.2016
(51) Int. Cl.: B60W 10/08, B60W 30/18, B60W 20/14, B60W 30/02

(54) **PROCEDE DE PILOTAGE DU MOTEUR THERMIQUE D'UN VEHICULE HYBRIDE POUR UNE PHASE DE DECELERATION DU VEHICULE**
STEUERUNGSVERFAHREN EINES VERBRENNUNGSMOTOR EINES HYBRIDFAHRZEUGES WÄHREND EINER VERLANGSAMERUNGSPHASE
HYBRID VEHICLE ENGINE CONTROL PROCESS IN THE CASE OF A DECELERATION PHASE

(30) Priorité: 07.05.2015 FR 1554104
(43) Date de publication de la demande: 09.11.2016
(73) Titulaire: PSA Automobiles SA, 78300 Poissy (FR)
(72) Inventeur: BLANCHET, ALEXANDRE, 78124 MONTAINVILLE (FR); MILHAU, YOHAN, 78400 CHATOU (FR); ROCQ, GAETAN, 78125 LA BOISSIERE ECOLE (FR); BARDET, ARNAUD, 78150 LE CHESNAY (FR)
(74) Mandataire: Fernandez, Francis Lionel

(56) Documents cités:
- EP-A1- 2 127 987
- EP-A2- 0 366 088
- EP-A2- 1 717 084
- WO-A1-2009/109825
- US-A1- 2007 205 735

## Description

Le domaine de l'invention concerne un procédé de pilotage d'un groupe motopropulseur hybride et le véhicule automobile hybride.

Un véhicule hybride est motorisé par un premier moteur, généralement un moteur thermique, et un deuxième moteur, le plus souvent capable de récupérer de l'énergie cinétique. Un véhicule hybride électrique à récupération d'énergie comprend une machine électrique apte à fournir un couple de traction aux roues et à fournir un couple récupératif d'énergie cinétique lors d'une décélération du véhicule, appelé également couple récupératif de freinage.

Le couple récupératif d'énergie de la machine électrique est un couple négatif commandé dans les phases de décélération du véhicule pour freiner le véhicule. Il a pour effet de récupérer de l'énergie cinétique du véhicule et de recharger un accumulateur d'énergie électrique.

Cependant, lorsque l'état de charge de l'accumulateur électrique est à la limite maximale d'état de charge, le freinage récupératif ne peut pas être piloté. Cette situation n'est pas souhaitable car d'une part il s'agit d'une opportunité manquée de rechargement de l'accumulateur et, d'autre part, la décélération du véhicule ne peut pas être contrôlée au moyen de la machine électrique. Il est alors nécessaire que le conducteur utilise le système de freinage à friction.

Il est connu dans l'état de la technique le document US20140148983A1 de KIA MOTORS CORPORATION décrivant dans les paragraphes [008] et [009] une proposition visant à mettre en transmission le moteur thermique avec les roues afin de fournir un couple de perte aux roues lorsque le couple récupératif n'est pas en mesure d'être fourni.

On notera que la fourniture du couple de perte est déclenchée lors d'une situation de roulage en roue libre du véhicule.

Or, le freinage récupératif et le freinage moteur thermique introduisent des comportements du véhicule très différents. Le freinage récupératif introduit un couple de freinage graduel alors que le freinage moteur est lui plutôt brusque. De plus, le conducteur n'est pas en mesure d'anticiper lequel des deux freinages sera appliqué. Cette solution ne présente donc pas un agrément de conduite satisfaisant pour le conducteur et pour le contrôle d'un véhicule hybride.

Par ailleurs, le même document propose pour résoudre ce problème un procédé de recharge et décharge de l'accumulateur électrique pour maintenir les opportunités d'opération du freinage récupératif. En particulier, lorsque l'accumulateur est en situation d'état de charge maximal, le superviseur du groupe motopropulseur pilote un dispositif d'assistance au démarrage du moteur thermique pour consommer de l'énergie électrique et ainsi baisser l'état de charge de l'accumulateur électrique. On notera que le moteur thermique est alors découplé de la transmission aux roues.

Cette solution a pour objectif d'augmenter les opportunités de recharge de l'accumulateur d'énergie.

Cependant, cette stratégie de recharge et décharge de l'accumulateur met en fonctionnement le dispositif d'assistance au démarrage et le moteur thermique de façon inattendue par le conducteur. En particulier, ils se mettent en fonctionnement lorsque l'état de charge de l'accumulateur est maximal, indépendamment d'un besoin instantané du conducteur.

On comprend donc que le démarrage du moteur thermique sans que celui-ci soit mis en transmission avec les roues durant le freinage récupératif peut être incompréhensible par le conducteur. Ce dernier interprètera certainement ce comportement comme un disfonctionnement du véhicule.

De plus, il peut être problématique d'imposer des décharges inutiles de l'accumulateur électrique accélérant son vieillissement.

Par ailleurs, la machine électrique et l'accumulateur électrique présentent des limites organiques de fonctionnement provoquant une saturation du couple récupératif à une limite de récupération. Les conditions de saturation du couple récupératif peuvent être par exemple une limite de couple maximal de la machine électrique, une quantité d'énergie maximale récupérable dans l'accumulateur, une limite de température de fonctionnement.

En particulier, la saturation du couple récupératif est problématique lorsque la consigne de freinage est supérieure aux capacités de récupération d'énergie.

Par ailleurs, le document EP 2 127 987 A1 montre un procédé de pilotage d'une phase de décélération d'un groupe motopropulseur de véhicule hybride conformément au préambule de la revendication 1 tenant compte des conditions de saturation du couple régénératif.

Ainsi pour résumer, il existe donc un besoin d'améliorer le pilotage d'une phase de décélération d'un véhicule automobile hybride et en particulier d'améliorer l'agrément de conduite et la coordination des organes de motorisation du groupe motopropulseur. Il est également recherché de résoudre la problématique de la saturation du couple récupératif lorsqu'une consigne de freinage est supérieure aux capacités de récupération.

Plus précisément, l'invention concerne un procédé de pilotage d'une phase de décélération d'un groupe motopropulseur de véhicule hybride comprenant un moteur thermique apte à fournir un couple de perte aux roues et un deuxième moteur piloté lors de la phase de décélération pour fournir soit un couple de traction aux roues, soit un couple récupératif d'énergie cinétique dans un accumulateur d'énergie, le couple récupératif pouvant être contraint par une limite de récupération lorsqu'une condition de saturation de la récupération est activée.

Le procédé comprend les étapes successives suivantes:
- la fourniture du couple de traction uniquement par le deuxième moteur lorsqu'une consigne de couple aux roues est positive,
- la fourniture du couple récupératif par le deuxième moteur dès que la consigne de couple aux roues est négative.

Selon l'invention, le procédé comprend également une étape de fourniture du couple de perte en complément du couple récupératif si la condition de saturation de la récupération d'énergie est activée.

Plus précisément, la fourniture du couple de perte est pilotée par une commande de démarrage du moteur thermique, puis par une commande de mise en transmission du moteur thermique avec les roues, et ensuite par une commande de fonctionnement du moteur thermique sans injection de carburant.

Selon un mode de réalisation, la condition de saturation de la récupération est fonction d'au moins un paramètre de fonctionnement du groupe motopropulseur ou une combinaison de paramètres parmi les paramètres suivant :
- limite maximale d'une quantité d'énergie transférable dans l'accumulateur ;
- limite de température de l'accumulateur ;
- limite organique du deuxième moteur ;
- limite fonctionnelle du deuxième moteur.

De préférence, la fourniture de couple de perte aux roues est fonction également d'une confirmation d'un besoin du couple de perte.

Selon une variante, l'activation de la confirmation est fonction d'une première estimation d'une quantité de couple récupératif qui est contraint au regard d'un premier seuil prédéterminé et d'une première temporisation déclenchée lors de l'activation de la condition de saturation.

Selon une variante, la désactivation de la confirmation est fonction d'une deuxième estimation d'une quantité de couple récupératif de réserve au regard d'un deuxième seuil prédéterminé et d'une deuxième temporisation déclenchée lors de la désactivation de la condition de saturation.

Plus précisément, le deuxième moteur est une machine électrique ou une machine hydraulique.

Plus précisément, l'accumulateur est à un niveau de charge d'énergie inférieure à une limite de charge maximale lors de la fourniture du couple de perte.

L'invention prévoit un véhicule automobile hybride comprenant un calculateur de supervision.

Selon l'invention, le calculateur de supervision exécute le procédé de pilotage selon l'une quelconque des variantes précédentes lors d'une phase de décélération du véhicule.

Grâce à l'invention, le pilotage d'une phase de décélération présente un agrément de conduite amélioré. En particulier, le moteur thermique fournit un couple de perte supplémentaire pour approcher la consigne du conducteur durant la phase de freinage.

De plus, le moteur thermique est démarré et fournit un couple de perte lors d'un besoin de freinage important par le conducteur. Ce comportement du groupe motopropulseur est compréhensible par le conducteur.

Par ailleurs, le procédé de pilotage augmente le potentiel de freinage du véhicule lorsque celui-ci est en freinage récupératif.

Le procédé permet donc l'amélioration de la sécurité en augmentant les capacités de freinage, mais surtout en maîtrisant la répétabilité du niveau de freinage habituellement observée par le conducteur lors d'un pied levé.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels
- la figure 1 représente un schéma fonctionnel d'un groupe motopropulseur hybride électrique pour la mise en œuvre du procédé de pilotage ;
- la figure 2 représente une séquence d'étapes du procédé de pilotage selon l'invention ;
- la figure 3 représente des graphiques de séquences de commandes de couple pilotées par le superviseur du groupe motopropulseur lors du procédé de pilotage.

Le procédé de pilotage d'une phase de décélération proposé par l'invention s'applique aux véhicules hybrides comprenant un premier moteur thermique et un deuxième moteur à récupération d'énergie cinétique. Le procédé de pilotage vise à améliorer le pilotage de la phase de décélération en particulier en termes d'agrément et de sécurité de conduite pour fournir un couple aux roues en adéquation avec la consigne aux roues. Le procédé propose en particulier un pilotage du moteur thermique introduisant un couple de perte lorsque le deuxième moteur est saturé.

Lors d'une phase de récupération d'énergie durant la décélération du véhicule, l'énergie cinétique est transformée en énergie transférable dans un accumulateur d'énergie. On notera que dans le cadre de l'invention le véhicule hybride peut être électrique ou hydraulique.

Dans le premier cas, le deuxième moteur est une machine électrique réversible et l'accumulateur d'énergie est un accumulateur électrique, par exemple une batterie électrique.

Dans le deuxième cas, le deuxième moteur est une machine hydraulique et l'accumulateur d'énergie est un accumulateur à fluide comprimé. Dans la suite de la description, le procédé de pilotage est décrit pour un groupe motopropulseur hybride électrique.

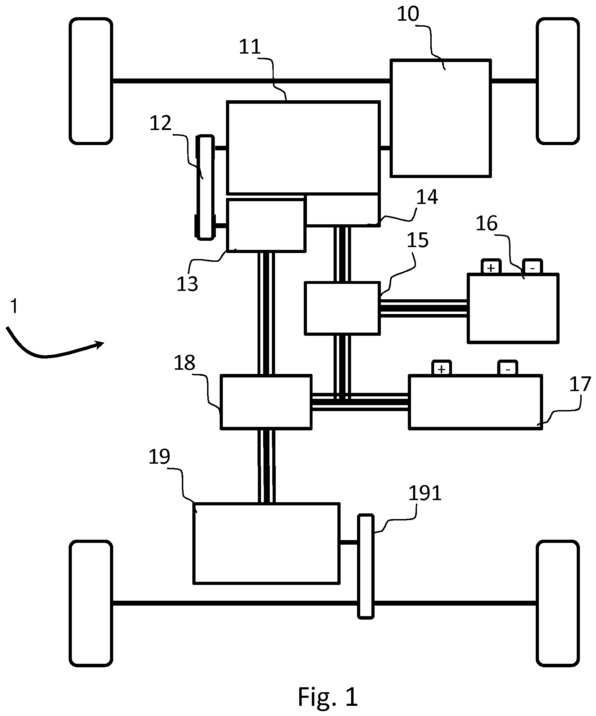

La figure 1 représente le groupe motopropulseur 1 d'un véhicule hybride électrique.

Le groupe motopropulseur 1 est motorisé par un train avant et un train arrière. Le train avant comprend un moteur thermique 11 relié à une boite de vitesse 10 effectuant la transmission aux roues avec le moteur thermique 11. Le moteur thermique 11 est apte à entrainer une première machine électrique 13 au moyen d'un dispositif de transmission 12, par exemple une courroie ou un dispositif de couplage.

La première machine électrique 13 est destinée à fournir de l'énergie électrique à un ou des accumulateurs électriques du groupe motopropulseur. Lorsqu'elle fonctionne en mode générateur, la machine électrique 13 est entrainée par le moteur thermique. Elle peut également fonctionner comme un moteur électrique dans certains modes de roulage, par exemple au démarrage.

Un démarreur 14 permet également de fournir une assistance au démarrage au moteur thermique 11.

Le groupe motopropulseur 1 comprend également un deuxième moteur 19 qui, dans cette variante, est une deuxième machine électrique attelée au train arrière. Une transmission comprenant un dispositif de couplage 191 relie la deuxième machine électrique 19 aux roues du train arrière.

Le dispositif de couplage peut être piloté pour mettre en transmission la deuxième machine électrique 19 avec les roues pour transmettre du couple aux roues dans un mode de propulsion électrique ou pour récupérer de l'énergie cinétique du véhicule dans le mode récupératif. Dans ce dernier cas, l'énergie cinétique est convertie en énergie électrique pour être conservée dans l'accumulateur électrique 17.

Dans une variante, il est envisageable que la deuxième machine électrique de traction et de récupération d'énergie soit attelée au train avant.

On rappelle qu'il est également envisageable dans une autre variante que le deuxième moteur soit une machine hydraulique couplée à un accumulateur d'énergie sous la forme d'un fluide comprimé. Dans cette variante, la machine hydraulique peut être positionnée sur le train avant ou le train arrière.

L'accumulateur électrique 17 est connecté à un réseau électrique basse tension, sur lequel la première machine électrique 13 et la deuxième machine électrique 19 sont connectées via un onduleur 18. L'accumulateur d'énergie peut être chargé à un niveau de charge compris entre une limite maximale (généralement fixée entre 80% et 100% de la capacité de charge totale) et une limite minimale.

Un convertisseur de tension 15 est connecté au réseau basse tension d'une part, et à un réseau très basse tension d'autre part. Le réseau très basse tension alimente un accumulateur électrique 16, un réseau de bord et le démarreur 14.

Un calculateur de supervision (non représenté sur la figure 1) coordonne le pilotage des composants décrits précédemment pour le bon fonctionnement du véhicule et l'exécution des divers modes de roulage.

On notera tout d'abord que le véhicule peut fonctionner selon un premier mode hybride, minimisant la consommation de carburant en optimisant le fonctionnement du moteur thermique, de la boite de vitesses et des première et deuxième machines électriques 13, 19, un deuxième mode tout électrique, dans lequel le moteur thermique 11 est éteint, un troisième mode à quatre roues motrices pour maximiser la tenue de route et enfin un quatrième mode sportif favorisant la performance du véhicule.

Chaque mode de roulage est piloté par le calculateur de supervision et détermine un comportement spécifique du véhicule et prévisible par le conducteur. La sélection du mode de roulage est un des facteurs de calcul des consignes de couple pour au moins le moteur thermique 11, la deuxième machine électrique 19 de traction et la première machine électrique 13.

Dans cette description une consigne de couple positive correspond à un couple générant de l'énergie mécanique sur l'arbre d'entraînement de sortie d'un moteur (thermique, électrique ou hydraulique). Une consigne de couple négative correspond à un couple générant de l'énergie en entrée du moteur (énergie mécanique sur l'arbre d'un moteur thermique, énergie électrique aux bornes du moteur électrique ou énergie hydraulique sur un moteur hydraulique) en la prélevant sur l'arbre de sortie.

On rappelle succinctement pour la bonne compréhension de l'invention des fonctions de calcul exécutées par le calculateur de supervision.

Le calculateur de supervision exécute diverses fonctions. Une première fonction de calcul est l'interface conducteur pour récolter les informations de roulage et ordres du conducteur. Une deuxième fonction de calcul est une fonction de détermination de la consigne de couple du conducteur. Une troisième fonction de calcul détermine les limitations organiques de couple du moteur thermique 11, de la première machine électrique 13 et de la deuxième machine électrique 19. Une quatrième fonction de calcul détermine la répartition de couple entre le moteur thermique 11, la première machine électrique 13 et la deuxième machine électrique 19 en fonction des paramètres de roulage, de la consigne de couple du conducteur et des limitations organiques.

On notera que les moyens d'interface conducteur du véhicule comprennent un actionneur d'accélération, par exemple une pédale d'accélération, une palette manuelle d'accélération ou bien un actionneur logiciel de pilotage programmé ou automatique à une vitesse donnée. Par ailleurs, les moyens d'interface comprennent des capteurs de vitesse du véhicule et tout moyen d'acquisition de données de roulage nécessaire à l'élaboration de la consigne de couple du conducteur.

Plus précisément, le calculateur de supervision peut déterminer une consigne de couple à destination du moteur thermique 11 pour la fourniture d'un couple de traction aux roues, et pour la fourniture d'un couple pour l'entrainement d'accessoires (par exemple climatisation, pompe, première machine électrique 1). Il s'agit d'une consigne de couple positive.

Dans le cadre du procédé de pilotage de la phase de décélération selon l'invention, le calculateur de supervision peut piloter le moteur thermique 11 en régulation de couple pour la fourniture d'un couple de perte et piloter la transmission de ce couple de perte aux roues. Dans ce mode, l'injection de carburant au moteur thermique est coupée et le couple de perte est équivalent au couple de frottement des éléments internes du moteur et au couple de pompage dans les cylindres. Le couple de perte est un couple négatif.

De plus, le couplage et la mise en fonctionnement d'un accessoire peuvent être pilotés pour augmenter le couple de perte aux roues.

Par ailleurs, le calculateur de supervision peut déterminer une consigne de couple à destination de la deuxième machine électrique pour la fourniture du couple de traction par la deuxième machine électrique 19 lorsqu'une consigne de couple aux roues est positive, ou la fourniture d'un couple récupératif quand la consigne de couple aux roues est négative.

On définit le couple récupératif comme étant un couple négatif généré par la machine électrique et fournissant de l'énergie électrique à l'accumulateur électrique 17. Dans cette situation, l'accumulateur 17 est rechargé en énergie. Plus précisément, la consigne de couple récupératif est une commande pour piloter la deuxième machine électrique 19 pour transformer l'énergie mécanique provenant des roues du véhicule en une énergie électrique à accumuler dans l'accumulateur 17. Le calculateur de supervision pilote également le dispositif de couplage 191 pour que la deuxième machine électrique soit en transmission avec les roues.

On notera que le couple récupératif peut être contraint par une limite de récupération lorsqu'une condition de saturation de la récupération est activée. La limite de récupération est un couple négatif dont la valeur absolue est fonction de la condition de saturation. Le calculateur de supervision impose donc un couple récupératif constant (la limite de récupération) tant que la condition de saturation est active.

Par ailleurs, le calculateur de superviseur est apte à déterminer une première estimation de la consigne de couple non contrainte correspondant à la consigne sans application d'une limitation de saturation. Il s'agit d'une consigne pouvant présenter un couple surpassant la limite de récupération.

A l'inverse, lorsque la condition de saturation n'est pas activée, le calculateur de supervision est apte à déterminer une deuxième estimation d'un couple de réserve, correspondant à la différence entre le couple récupératif actif et la limite de récupération.

La condition de saturation de la récupération est fonction d'un ou plusieurs paramètres de fonctionnement courant du groupe motopropulseur au regard de paramètres relatifs à la deuxième machine électrique 19 et de l'accumulateur d'énergie 17. On peut citer les paramètres suivants :
- la limite maximale d'une quantité d'énergie transférable dans l'accumulateur ;
- la limite de température de l'accumulateur;
- une limite organique du deuxième moteur;
- une limite fonctionnelle du deuxième moteur.

La limite maximale d'une quantité d'énergie transférable dans l'accumulateur peut être contrôlée par la valeur d'un courant électrique aux bornes d'un accumulateur électrique à un instant donné ou par la valeur d'un débit de fluide en entrée de l'accumulateur hydraulique.

La limite organique peut correspondre à la valeur absolue d'un couple positif ou négatif fournit par la machine électrique 19 en fonction d'une température de la machine ou d'un courant de charge maximal.

La limite fonctionnelle correspond à la pilotabilité, un arbitrage, des compromis acoustiques et vibratoires, anticipation ou retard volontaires de la machine électrique.

La condition de saturation est contrôlée par le calculateur de supervision qui surveille les paramètres de fonctionnement courants du groupe motopropulseur au moyen d'estimation de données ou de relevés de capteurs. Par exemple, une logique de contrôle logicielle ou matérielle à base de circuits logiques peut être mise en œuvre pour le contrôle de la condition de saturation.

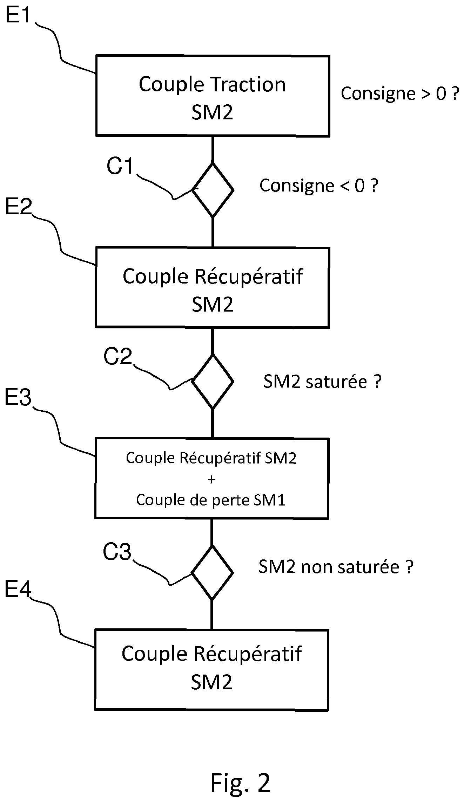

La figure 2 représente le procédé de pilotage de la phase de décélération proposé par l'invention. On considère que le véhicule est dans un premier temps dans une situation de roulage requérant un couple aux roues positif.

En particulier dans le mode de roulage hybride, la fourniture de couple aux roues par la deuxième machine électrique 19 est privilégiée ainsi que le pilotage d'une récupération d'énergie.

Par ailleurs, dans le mode de roulage hybride le moteur thermique peut être commandé en arrêt (traction électrique uniquement), en démarrage excluant la fourniture d'un couple de traction aux roues (traction électrique uniquement) ou en démarrage pour une fourniture d'un couple de traction aux roues.

Dans une phase initiale du procédé de pilotage, le calculateur de supervision commande une première étape E1 de fourniture de couple aux roues par la deuxième machine électrique 19 uniquement. Durant cette étape E1, la consigne de couple aux roues est positive et la consigne de couple à la machine électrique 19 est positive et celle-ci est mise en transmission avec les roues. De plus, le moteur thermique 11 est commandé en arrêt et ne fournit pas de couple aux roues.

Le calculateur de supervision vérifie lors d'un contrôle C1 si la consigne de couple aux roues est négative. Le calculateur de supervision commande une deuxième étape E2 de fourniture du couple récupératif par la deuxième machine électrique 19 dès que la consigne de couple aux roues est négative.

On notera que durant l'étape E1 précédente, la machine électrique 19 a fourni du couple aux roues et, par conséquent, l'état de charge de l'accumulateur d'énergie 17 est inférieur à la limite maximale de charge lorsque la consigne de couple aux roues devient négative.

Lors de l'étape E2, la recharge de l'accumulateur est effective et augmente lorsque le couple récupératif réalisé augmente.

Si la condition de saturation de la récupération d'énergie est activée, le couple récupératif est contraint à la limite de récupération.

Le calculateur de supervision vérifie lors d'un contrôle C2 si la condition de saturation est activée. Le procédé de pilotage comprend alors une troisième étape E3 de fourniture du couple de perte aux roues par le moteur thermique 11 en complément du couple récupératif le cas échéant. La fourniture du couple de perte est pilotée par une commande de démarrage du moteur thermique, puis par une commande de mise en transmission du moteur thermique avec les roues, et ensuite par une commande de fonctionnement du moteur thermique sans injection de carburant. Afin de coupler les roues avec le moteur thermique, il est préférable de piloter dans une première phase le moteur thermique en couple positif, puis dans une deuxième phase une fois le couplage réalisé, de piloter le moteur thermique sur ses pertes. Cette séquence de pilotage permet d'effectuer le couplage du moteur thermique en douceur.

Le couple de perte du moteur thermique en complément du couple récupératif permet d'ajouter un couple de freinage pour respecter la consigne de couple aux roues, et surtout assurer le niveau de décélération attendue habituellement par le conducteur. Le couple de perte aux roues est constant durant sa fourniture à régime moteur constant. Le couple de perte augmente en fonction du régime moteur.

Dans une variante préférentielle, le contrôle C2 comprend également la vérification d'une confirmation d'un besoin du couple de perte. La fourniture de couple de perte aux roues est alors fonction également de l'activation de la confirmation du besoin du couple de perte.

La confirmation du besoin du couple de perte empêche les fournitures du couple de perte intempestives. La confirmation est activée lorsque le besoin de couple négatif est suffisamment supérieur à un seuil prédéterminé de quantité de couple et lorsque ce besoin est sollicité durant une durée suffisamment longue. La confirmation améliore l'agrément de conduite.

Plus précisément, l'activation de la confirmation est fonction d'une première estimation de la quantité de couple récupératif qui est contraint au regard d'un premier seuil prédéterminé et d'une première temporisation déclenchée lors de l'activation de la condition de saturation.

Le calculateur de supervision vérifie ensuite, lorsque la fourniture du couple de perte par le moteur thermique est effective, lors d'un contrôle C3 si la condition de saturation est désactivée, par exemple si le couple récupératif commandé est inférieur à la limite de récupération.

Par ailleurs, selon une variante préférentielle, le contrôle C3 comprend également la vérification de la confirmation du besoin du couple de perte. La désactivation de la confirmation est fonction d'une deuxième estimation d'une quantité de couple récupératif de réserve au regard d'un deuxième seuil prédéterminé et d'une deuxième temporisation déclenchée lors de la désactivation de la condition de saturation.

Si le contrôle C3 détecte la désactivation de la condition de saturation, ainsi que la désactivation de la confirmation du besoin du couple de perte le cas échéant, le procédé de pilotage comprend alors une quatrième étape E4 de fourniture du couple récupératif par la deuxième machine électrique 19 uniquement. Le moteur thermique 11 est alors découplé des roues et son arrêt est commandé.

Dans une variante, Il est envisageable que le procédé comprenne à la quatrième étape E4 un autre fonctionnement du groupe motopropulseur, par exemple la fourniture d'un couple de traction aux roues par la machine électrique 19 ou par le moteur thermique si la consigne de couple aux roues est positive.

On notera que l'activation et désactivation de la confirmation est contrôlée par le calculateur de supervision qui surveille les paramètres de fonctionnement courants du groupe motopropulseur au moyen d'estimations de couples, d'estimations de quantité de couples sur une durée donnée (correspondant à des niveaux d'énergie) ou de relevés de capteurs. En particulier, l'activation et désactivation de la confirmation sont fonction d'une estimation d'une quantité de couple contraint ou de réserve à la suite de l'activation et désactivation de la condition de saturation respectivement.

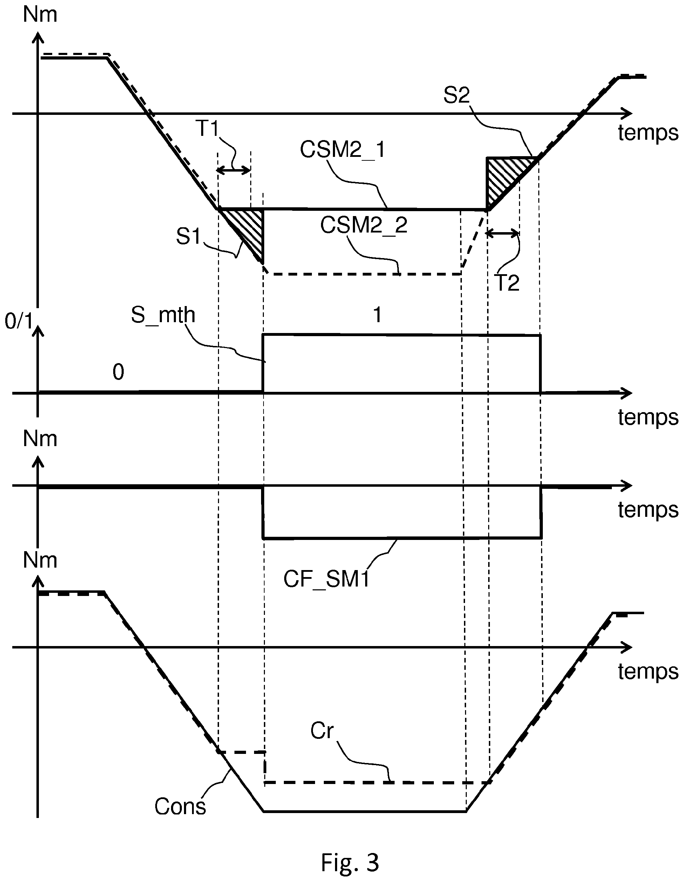

La figure 3 décrit plus précisément la séquence des commandes de couple du moteur thermique 11, de la machine électrique 19 et de la consigne de couple aux roues durant une variante d'exécution du procédé de pilotage. La figure comprend quatre graphiques disposés verticalement.

Le premier graphique, en haut de la page, décrit l'évolution dans le temps de la consigne de couple de la deuxième machine électrique 19. La ligne en trait plein CSM2_1 représente la consigne de couple de la machine électrique 19 sur laquelle est appliquée la limitation de récupération. La ligne en trait pointillée CSM2_2 représente l'estimation de la consigne de couple de la machine électrique 19 sans application de la limitation de récupération. Dans le cadre de l'invention cette estimation n'est pas appliquée en consigne à la machine électrique 19.

On notera que le couple récupératif par la machine électrique 19 est commandé dès que la consigne de couple aux roues est négative. Durant la phase de décélération, la traction du véhicule et le freinage récupératif sont constamment contrôlés par la machine électrique 19. Le couple de traction (phase de la consigne de couple de la machine électrique 19 qui est positif) est décroissant durant la phase de décélération. Le couple récupératif est négatif.

De plus, le procédé de pilotage proposé par l'invention exclut l'exécution d'une phase de roulage en roue-libre, ceci afin de proposer un comportement du véhicule en lien avec le mode de roulage hybride et éventuellement tout électrique.

Ce premier graphique permet de visualiser l'estimation de la quantité du couple récupératif contraint au regard du premier seuil S1, déterminée pour piloter le démarrage du moteur thermique 11.

Il permet également de visualiser l'estimation de la quantité du couple récupératif de réserve au regard du deuxième seuil S2, déterminée pour piloter l'arrêt du moteur thermique 11. Les première et deuxième temporisations T1, T2 sont également représentées pour l'activation et désactivation du couple de perte respectivement.

Le deuxième graphique, positionné en dessous du premier, décrit l'évolution dans le temps d'un signal booléen S_mth de commande de marche et arrêt du moteur thermique 11.

Au début de la séquence le signal S_mth est bas, commandant l'arrêt du moteur thermique. La machine électrique 19 fournit un couple aux roues, de traction ou couple récupératif.

Le signal S_mth, à l'état haut, commande le démarrage du moteur thermique si la condition de saturation est activée, si l'estimation de la quantité de couple contraint (visible sur le premier graphique) est supérieure au seuil SI et si le temps écoulé à la suite de l'activation de la condition de saturation est supérieur à la temporisation T1.

L'estimation de la quantité de couple contraint est la différence de couple entre l'estimation du couple récupératif non contraint CSM2_2 et le couple récupératif contraint CSM2_1 durant une durée donnée.

Le troisième graphique, positionné en dessous du deuxième graphique, décrit l'évolution dans le temps du couple de perte aux roues CF_SM1 fourni par le moteur thermique 11. Le couple de perte est transmis aux roues lorsque le signal S_mth est haut. Le couple de perte correspond au couple du moteur thermique 11, piloté en démarrage, sans injection de carburant.

Le quatrième graphique, positionné en bas de la page, décrit l'évolution dans le temps de la consigne de couple aux roues Ccons en trait plein et le couple appliqué aux roues Cr en trait pointillé. La consigne de couple Ccons est décroissante durant la phase de décélération du véhicule, durant une première phase la consigne est positive puis devient négative. Le couple aux roues Cr, composé du couple récupératif CSM2_1 et du couple de perte CF_SM1 lorsque la condition de saturation de la récupération est activée, est proche de la consigne de couple Ccons. La phase de la fourniture du couple de perte (étape E3) présente un couple aux roues constant avec un couple ayant une valeur absolue supérieure à la limite de récupération.

On notera que le couple de perte est appliqué lorsque le besoin de freinage supplémentaire est détecté. L'agrément de conduite est donc amélioré et le comportement du groupe motopropulseur compréhensible par le conducteur, à la différence de la solution de l'état de la technique.

On notera que le couple de perte transmis par le moteur thermique 11 est fournit uniquement lorsque le couple récupératif de la deuxième machine électrique 19 est appliqué.

Par ailleurs, quelle que soit la configuration du groupe motopropulseur hybride 1 (deuxième moteur 19 attelé au train arrière ou avant, deuxième moteur 19 en version hydraulique), la logique de contrôle des consignes de couples à destination du moteur thermique 11 et du deuxième moteur 19 sont similaires au procédé de pilotage décrit précédemment.

## Revendications

1. Procédé de pilotage d'une phase de décélération d'un groupe motopropulseur (1) de véhicule hybride comprenant un moteur thermique (11) apte à fournir un couple de perte (CF_SM1) aux roues et un deuxième moteur (19) piloté lors de la phase de décélération pour fournir soit un couple de traction aux roues, soit un couple récupératif d'énergie cinétique dans un accumulateur d'énergie (17), le couple récupératif pouvant être contraint par une limite de récupération lorsqu'une condition de saturation de la récupération est activée, le procédé comprenant les étapes successives suivantes:
- la fourniture (E1) du couple de traction uniquement par le deuxième moteur (19) lorsqu'une consigne de couple aux roues est positive,
- la fourniture (E2) du couple récupératif (CSM2_1) par le deuxième moteur (19) dès que la consigne de couple aux roues est négative (Ccons),
- une étape de fourniture (E3) du couple de perte (CF_SM1) en complément du couple récupératif (CSM2_1) si la condition de saturation de la récupération d'énergie est activée,
ledit procédé étant **caractérisé en ce que** la fourniture (E3) du couple de perte est pilotée par une commande de démarrage du moteur thermique (11), puis par une commande de mise en transmission du moteur thermique (11) avec les roues, et ensuite par une commande de fonctionnement du moteur thermique (11) sans injection de carburant.

2. Procédé selon la revendication 1, **caractérisé en ce que** la condition de saturation de la récupération est fonction d'au moins un paramètre de fonctionnement du groupe motopropulseur ou une combinaison de paramètres parmi les paramètres suivant :
- limite maximale d'une quantité d'énergie transférable dans l'accumulateur (17) ;
- limite de température de l'accumulateur (17) ;
- limite organique du deuxième moteur (19) ;
- limite fonctionnelle du deuxième moteur (19).

3. Procédé selon l'une quelconque des revendications 1 à 2, **caractérisé en ce que** la fourniture (E3) de couple de perte aux roues est fonction également d'une confirmation d'un besoin du couple de perte.

4. Procédé selon la revendication 3, **caractérisé en ce que** l'activation de la confirmation est fonction d'une première estimation d'une quantité de couple récupératif qui est contraint au regard d'un premier seuil prédéterminé (S1) et d'une première temporisation (T1) déclenchée lors de l'activation de la condition de saturation.

5. Procédé selon l'une quelconque des revendications 3 à 4, **caractérisé en ce que** la désactivation de la confirmation est fonction d'une deuxième estimation d'une quantité de couple récupératif de réserve au regard d'un deuxième seuil prédéterminé (S2) et d'une deuxième temporisation (T2) déclenchée lors de la désactivation de la condition de saturation.

6. Procédé selon l'une quelconque des revendications 1 à 5, **caractérisé en ce que** le deuxième moteur (19) est une machine électrique ou une machine hydraulique.

7. Procédé selon l'une quelconque des revendications 1 à 6, **caractérisé en ce que** l'accumulateur (17) est à un niveau de charge d'énergie inférieure à une limite de charge maximale lors de la fourniture du couple de perte.

8. Véhicule automobile hybride comprenant un calculateur de supervision, **caractérisé en ce que** le calculateur de supervision exécute le procédé de pilotage selon l'une quelconque des revendications 1 à 7 lors d'une phase de décélération du véhicule.

## Patentansprüche

1. Verfahren zum Steuern einer Verzögerungsphase eines Antriebsstrangs (1) eines Hybridfahrzeugs, umfassend eine Wärmekraftmaschine (11), die in der Lage ist, ein Verlustmoment (CF_SM1) an die Räder zu liefern, und einen zweiten Motor (19), der während des gesteuert wird Verzögerungsphase, um entweder ein Zugdrehmoment an die Räder oder ein Rückgewinnungsdrehmoment der kinetischen Energie in einem Energiespeicher (17) bereitzustellen, wobei das Rückgewinnungsdrehmoment durch eine Wiederherstellungsgrenze eingeschränkt werden kann, wenn eine Sättigungsbedingung des Die Wiederherstellung wird aktiviert, wobei das Verfahren die folgenden aufeinanderfolgenden Schritte umfasst:
- Zufuhr (E1) des Zugmoments nur durch den zweiten Motor (19), wenn ein Drehmomentsollwert für die Räder positiv ist,
- Zufuhr (E2) des Wiederherstellungsdrehmoments (CSM2_1) durch den zweiten Motor (19), sobald der Drehmomentsollwert an den Rädern negativ ist (Ccons),
- ein Versorgungsschritt (E3) des Verlustdrehmoments (CF_SM1) zusätzlich zum Rückstelldrehmoment (CSM2_1), wenn die Bedingung erfüllt ist Sättigung Die Energierückgewinnung wird aktiviert,
wobei das Verfahren **dadurch gekennzeichnet ist, dass** die Zufuhr (E3) des Verlustdrehmoments durch einen Startbefehl der Wärmekraftmaschine (11) und dann durch einen Befehl zum Senden der Wärmekraftmaschine (11) gesteuert wird. 11) mit den Rädern und dann durch eine Betriebssteuerung der Wärmekraftmaschine (11) ohne Kraftstoffeinspritzung.

2. Verfahren nach Anspruch 1, **dadurch gekennzeichnet, dass** der Sättigungszustand der Rückgewinnung eine Funktion von mindestens einem Betriebsparameter des Antriebsstrangs oder einer Kombination von Parametern aus den folgenden Parametern ist:
- Höchstgrenze einer Energiemenge übertragbar auf den Akku (17);
- Temperaturgrenze des Druckspeichers (17); - organische Grenze des zweiten Motors (19);
- Funktionsgrenze des zweiten Motors (19).

3. Verfahren nach einem der Ansprüche 1 bis 2, das **dadurch gekennzeichnet ist, dass** die Zufuhr (E3) des Verlustdrehmoments zu den Rädern auch von einer Bestätigung einer Notwendigkeit des Verlustdrehmoments abhängt.

4. Verfahren nach Anspruch 3, **dadurch gekennzeichnet, dass** die Aktivierung der Bestätigung eine Funktion einer ersten Schätzung einer Menge des Rückgewinnungsdrehmoments ist, die hinsichtlich einer ersten vorbestimmten Schwelle (S1) und einer ersten Zeitverzögerung beschränkt ist (T1) wird ausgelöst, wenn die Sättigungsbedingung aktiviert ist.

5. Verfahren nach einem der Ansprüche 3 bis 4, **dadurch gekennzeichnet, dass** die Deaktivierung der Bestätigung eine Funktion einer zweiten Schätzung einer Größe des Reservewiederherstellungsdrehmoments in Bezug auf eine zweite vorbestimmte Schwelle (S2) und d ist 'Eine zweite Zeitverzögerung (T2) wird ausgelöst, wenn die Sättigungsbedingung deaktiviert wird.

6. Verfahren nach einem der Ansprüche 1 bis 5, **dadurch gekennzeichnet, dass** der zweite Motor (19) eine elektrische Maschine oder eine hydraulische Maschine ist.

7. Verfahren nach einem der Ansprüche 1 bis 6, das **dadurch gekennzeichnet ist, dass** der Akkumulator (17) bei Bereitstellung des Verlustdrehmoments auf einem Energieladungsniveau unterhalb einer maximalen Ladungsgrenze liegt.

8. Hybridfahrzeug mit einem Überwachungscomputer, der **dadurch gekennzeichnet ist, dass** der Überwachungscomputer das Steuerverfahren gemäß einem der Ansprüche 1 bis 7 während einer Fahrzeugverzögerungsphase ausführt.

## Claims

1. Method of controlling a deceleration phase of a powertrain (1) of a hybrid vehicle comprising a heat engine (11) capable of supplying a loss torque (CF_SM1) to the wheels and a second motor (19) controlled during the deceleration phase to provide either a traction torque to the wheels or a recovery torque of kinetic energy in an energy accumulator (17), the recovery torque being able to be constrained by a recovery limit when a saturation condition of the recovery is activated, the method comprising the following successive steps:
- supply (E1) of the traction torque only by the second motor (19) when a torque setpoint to the wheels is positive,
- supply (E2) of the recovery torque (CSM2_1) by the second motor (19) as soon as the wheel torque setpoint is negative (Ccons),
- a supply step (E3) of the loss torque (CF_SM1) in addition to the recovery torque (CSM2_1) if the condition saturation energy recovery is activated,
said method being **characterized in that** the supply (E3) of the loss torque is controlled by a start command of the heat engine (11), then by a command to send the heat engine (11) with the wheels, and then by an operating control of the heat engine (11) without fuel injection.

2. Method according to Claim 1, **characterized in that** the saturation condition of the recovery is a function of at least one operating parameter of the drive train or a combination of parameters from among the following parameters:
- maximum limit of a quantity of energy transferable to the accumulator (17);
- temperature limit of the accumulator (17);
- organic limit of the second motor (19);
- functional limit of the second motor (19).

3. Method according to any one of claims 1 to 2, **characterized in that** the supply (E3) of the loss torque to the wheels is also dependent on a confirmation of a need for the loss torque.

4. Method according to Claim 3, **characterized in that** the activation of the confirmation is a function of a first estimate of a quantity of recovery torque which is constrained with regard to a first predetermined threshold (S1) and a first time delay (T1) triggered when the saturation condition is activated.

5. Method according to any one of claims 3 to 4, **characterized in that** the deactivation of the confirmation is a function of a second estimate of a quantity of reserve recovery torque with regard to a second predetermined threshold (S2) and d 'a second time delay (T2) triggered when the saturation condition is deactivated.

6. Method according to any one of claims 1 to 5, **characterized in that** the second motor (19) is an electric machine or a hydraulic machine.

7. A method according to any one of claims 1 to 6, **characterized in that** the accumulator (17) is at an energy charge level below a maximum charge limit when providing the loss torque.

8. Hybrid motor vehicle comprising a supervision computer, **characterized in that** the supervision computer executes the control method according to any one of claims 1 to 7 during a vehicle deceleration phase.
